(19) Europäisches Patentamt
European Patent Office
Office européen des brevets

(11) Veröffentlichungsnummer : **0 132 637**
**B1**

(12) # EUROPÄISCHE PATENTSCHRIFT

(45) Veröffentlichungstag der Patentschrift : **30.12.86**

(51) Int. Cl.⁴ : **C 08 G 63/64**

(21) Anmeldenummer : **84107731.6**

(22) Anmeldetag : **04.07.84**

(54) **Thermotrope aromatische Polyestercarbonate, Verfahren zu ihrer Herstellung und ihre Verwendung zur Herstellung von Formkörpern, Filamenten, Fasern und Folien.**

(30) Priorität : **16.07.83 DE 3325704**

(43) Veröffentlichungstag der Anmeldung : **13.02.85 Patentblatt 85/07**

(45) Bekanntmachung des Hinweises auf die Patenterteilung : **30.12.86 Patentblatt 86/52**

(84) Benannte Vertragsstaaten : **DE FR GB IT NL**

(56) Entgegenhaltungen :
**FR-A- 2 340 963**
**US-A- 3 169 121**
**US-A- 4 105 633**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Brinkmeyer, Hermann, Dr.**
**Bodelschwinghstrasse 12**
**D-4150 Krefeld (DE)**
Erfinder : **Schmidt, Manfred, Dr.**
**Bodelschwinghstrasse 20**
**D-4150 Krefeld (DE)**
Erfinder : **Perrey, Hermann, Dr.**
**Auf der Rheinaue 8**
**D-4150 Krefeld (DE)**
Erfinder : **El Sayed, Aziz, Dr.**
**Saarlauterner Strasse 39**
**D-5090 Leverkusen (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft hochmolekulare thermotrope voll-aromatische Polyestercarbonate mit hoher Schlagzähigkeit und günstiger Schmelzviskosität, ein Verfahren zu ihrer Herstellung nach dem Umesterungsverfahren und ihre Verwendung zur Herstellung von Formkörpern, Filamenten, Fasern und Folien.

Als « thermotrop » bezeichnet man solche Polykondensate, die flüssig-kristalline Schmelzen bilden. Sie sind hinreichend bekannt, vergleiche z. B. F. E. McFarlane et al., Liquid Crystal Polymers II, Contemporary Topics in Polymer Science, Vol. 2, Plenum Publishing Corporation, 1977 ; W. J. Jackson und H. F. Kuhfuss, J. Polymer Science, Polymer Chem. Ed. *14*, 2042 (1976) ; W. C. Wooten et al. in A. Ciferri « Ultra-high Modulus Polymers », Applied Science Publ., London 1979, S. 362 f. ; A. Blumstein et al., « Liquid Crystalline Order in Polymers », Academic Press 1978 ; EP 22 344, 24 499, 15 856, 17 310, 15 088, 8 855, WO 79/01034, 79/797 und DE-OS 2 751 653.

Der flüssig-kristalline Zustand der Polykondensatschmelzen läßt sich mit Hilfe eines Polarisationsmikroskops untersuchen : Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe aus 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 μm.

Die Untersuchung der flüssig-kristallinen Schmelzen erfolgte nach dem Aufschmelzen der Proben bei Temperaturen, bei denen die Schmelzen so dünnflüssig waren, daß sie durch geringfügiges Verschieben des Deckgläschens zwischen diesem und dem Objektträger in heftige Turbulenz versetzt wurden.

Um sicherzustellen, daß die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung noch weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als thermotrop eingestuft. Sie zeigten in der Meßanordnung Werte über 1 Skalenteil, meist Werte von 3 bis 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z. B. bei G. W. Gray und P.A. Windsor, « Plastic Crystals, Physico-Chemical Properties and Methods of Investigation », insbesondere Chapter 3, John Wiley & Sons, New York, Sydney, Toronto 1974 beschrieben ist.

Die DE-OS 20 25 971 betrifft hochmolekulare voll-aromatische Polyester auf Basis von p-Hydroxybenzoesäure, aromatischen Dicarbonsäuren (wie Terephthal- und Isophthalsäure) und Diphenolen (wie Hydrochinon oder 4,4'-Dihydroxybiphenyl). Aufgrund der verwendeten Komponenten sind diese Polyester thermotrop ; sie können z. B. zu Fasern verarbeitet werden. Von den 13 Polyestern der Beispiele schmilzt ein einziger unter 300 °C. Diese Polyester sind also schlecht verarbeitbar.

Die DE-PS 27 04 315 (= FR-A-2340963) beschreibt thermotrope voll-aromatische Polyestercarbonate auf Basis von l Mol p-Hydroxybenzoesäure, m Mol Kohlensäure, n Mol Hydrochinon und ggf. p Mol einer aromatischen Dicarbonsäure wobei für die Molverhältnisse gilt :

$$0{,}8 \geq l(l + m + p) \geq 0{,}5$$
$$0{,}5 \geq m/(l + m + p) \geq 0{,}01$$
$$0{,}5 > p/(l + m + p) \geq 0$$
$$1{,}1 \geq n/(m + p) \geq 0{,}9.$$

Die Fließtemperaturen dieser Polyestercarbonate betragen mindestens 265 °C (Beispiel 5), was einer für eine problemlose Verarbeitung zu hohen Schmelzviskosität entspricht. Zwar kann die Fließtemperatur durch Verzicht auf die Festphasennachkondensation und die damit verbundene Molekulargewichtserhöhung noch gesenkt werden, doch muß man damit auch verschlechterte mechanische Eigenschaften in Kauf nehmen.

Aufgabe der Erfindung war es daher, thermotrope voll-aromatische Polyestercarbonate bereitzustellen, die gegenüber den Polyestercarbonaten der DE-PS 27 04 315 besser verarbeitbar sind und dennoch hervorragende mechanische Eigenschaften aufweisen. Die neuen Produkte sollten einen Schmelzindex (DIN 53 735) von mindestens 10 g/10 Minuten, vorzugsweise von mindestens 20 und insbesondere von mindestens 40 g/10 Minuten (300 °C/21.6 kp) aufweisen. Falls der Schmelzindex der erfindungsgemäßen Polyestercarbonate die angegebenen Werte unter weniger drastischen Bedingungen als 300 °C/21.6 kp erreicht, genügen auch sie selbstverständlich der Forderung nach dem angegebenen Mindestschmelzindex. Bevorzugte erfindungsgemäße Polyestercarbonate besitzen einen Schmelzindex

(DIN 53 735) von maximal 200, vorzugsweise von maximal 150 g/10 Minuten (300 °C/21,6 kp). Gleichzeitig sollten die neuen Produkte eine Schlagzähigkeit von mindestens 20, vorzugsweise von mindestens 30, insbesondere von mindestens 40 kJ/m$^2$ besitzen. Außerdem sollten die neuen Produkte eine Kerbschlagzähigkeit von mindestens 10, vorzugsweise von mindestens 20, insbesondere von mindestens 30 kJ/m$^2$ haben. Weiterhin sollten die neuen Produkte einen Biege-E-Modul von mindestens 2 700, vorzugsweise von mindestens 3 000, insbesondere von mindestens 3 500 besitzen.

Überraschenderweise wurde gefunden, daß voll-aromatische Polyestercarbonate, die einkondensierte Reste von 4,4'-Dihydroxybiphenyl enthalten, die gewünschte Kombination vorteilhafter Eigenschaften besitzen.

Gegenstand der Erfindung sind thermotrope voll-aromatische Polyestercarbonate auf Basis von

(a) (ggf. substituierter) p-Hydroxybenzoesäure,
(b) Diphenol,
(c) Kohlensäure und ggf.
(d) aromatischer Dicarbonsäure,

wobei ein Teil der Diphenolreste (b) als 4,4'-Dihydroxybiphenylreste (e) vorliegt und — abgesehen von den Endgruppen — für die molaren Verhältnisse der Reste folgendes gilt :

$a + b = 1$,
$b = c + d$,
$e/b = 0{,}1$ bis 0,9, vorzugsweise 0,11 bis 0,7, insbesondere 0,125 bis 0,4, und
$c/c + d = 0{,}6$ bis 1 ;

$a = 0{,}4$ bis 0,8, vorzugsweise 0,6 bis 0,75,
$b - e = 0{,}02$ bis 0,53, vorzugsweise 0,06 bis 0,36, insbesondere 0,1 bis 0,35,
$c = 0{,}12$ bis 0,6, vorzugsweise 0,175 bis 0,4,
$d = 0$ bis 0,24, vorzugsweise 0 bis 0,12, und
$e = 0{,}02$ bis 0,53, vorzugsweise 0,027 5 bis 0,28, insbesondere 0,03 bis 0,16.

Bevorzugte (a) p-Hydroxybenzoesäuren sind durch $C_1$-$C_4$-Alkyl, $C_1$-$C_4$-Alkoxy, $C_6$-$C_{10}$-Aryl oder -Alkylaryl (wie Phenyl, Tolyl, Naphthyl), Halogen (vorzugsweise Chlor und Brom) kernsubstituierte p-Hydroxybenzoesäuren, z. B. 4-Hydroxy-2-methylbenzoesäure, 4-Hydroxy-3-methylbenzoesäure, 2-Ethyl-4-hydroxybenzoesäure, 3-Ethyl-4-hydroxybenzoesäure, 2- oder 3-Chlor-4-hydroxybenzoesäure, 4-Hydroxy-2-phenylbenzoesäure oder 4-Hydroxy-3-phenyl-benzoesäure, vorzugsweise jedoch unsubstituierte p-Hydroxybenzoesäure selbst.

Bevorzugte (b) Diphenole sind Verbindungen der Formel

$$HO{-}Z{-}OH \qquad (I)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind, z. B.

(1) Hydrochinon, Methylhydrochinon, Ethylhydrochinon, 1,4-Dihydroxynaphthalin, 1,5-Dihydroxynaphthalin, 2,6-Dihydroxynaphthalin, die zu keiner wesentlichen Winkelung der Polykondensatkette führen, und

(2) Verbindungen, die zu einer wesentlichen Winkelung der Polykondensatkette beitragen, z. B. Resorcin, 1,6-Dihydroxynaphthalin, 2,5-Dihydroxynaphthalin, 2,7-Dihydroxynaphthalin und Bisphenole der Formel

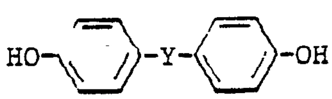

(II)

in der Y einen Alkylen- oder Alkylidenrest mit 1-7 C-Atomen, einen Cycloalkylen- oder Cycloalkylidenrest mit 5-12 C-Atomen, —O—, —S—, $-\underset{\underset{O}{\|}}{S}-$, —$SO_2$—, oder $-\underset{\underset{O}{\|}}{C}-$ bedeutet,

sowie deren kernalkylierte und kernhalogenierte Derivate, z. B.

Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,

Bis-(hydroxyphenyl)-sulfoxide,
Bis-(hydroxyphenyl)-sulfone und
4,4'-Bis-(hydroxyphenyl)-diisopropylbenzole

sowie deren kernalkylierte und kernhalogenierte Verbindungen, z. B.

Bis-(4-hydroxyphenyl)-methan,
1,1-Bis-(4-hydroxyphenyl)-ethan,
Bisphenol A,
1,1-Bis-(4-hydroxyphenyl)-cyclohexan,
Bis-(4-hydroxyphenyl)-sulfon,
4,4'-Dihydroxydiphenylether und
4,4'-Dihydroxydiphenylsulfid.

Es empfiehlt sich, die Diphenole derart auszuwählen, daß maximal 30 Mol-%, bezogen auf die Gesamtmenge an Diphenolresten, Diphenolreste der Gruppe (2) sind. Dabei ist ein hoher Anteil an Diphenolresten der Gruppe (2) insbesondere dann vertretbar, wenn er durch zusätzliche lineare Reste, z. B. Terephthalsäurereste, « kompensiert » wird.

Bevorzugte Derivate zum Einbau der (c) Carbonatgruppen sind Phosgen, Diarylcarbonate, z. B. Diphenylcarbonat, Ditolylcarbonat, Phenyl-tolylcarbonat, Dinaphthylcarbonat, Dialkylcarbonat z. B. Diethylcarbonat, Dimethylcarbonat, Dimethyldicarbonat, Diethyldicarbonat, Glykolcarbonat und Chlorameisensäureester.

Bevorzugte (d) aromatische Dicarbonsäuren besitzen 8 bis 24, vorzugsweise 8 bis 14, C-Atome und können pro aromatischen Ring durch bis zu 4 $C_1$-$C_4$-Alkylreste, $C_1$-$C_4$-Alkoxyreste oder Halogenatome (vorzugsweise Chlor und Brom) substituiert sein, z. B. Naphthalin-1,5-dicarbonsäure, Diphenyl-2,2'-dicarbonsäure, Diphenyl-4,4'-dicarbonsäure, Diphenylmethan-4,4'-dicarbonsäure, Diphenylether-4,4'-dicarbonsäure, Diphenylsulfon-4,4'-dicarbonsäure, vorzugsweise Terephthalsäure, Isophthalsäure und Naphthalin-2,6-dicarbonsäure sowie deren kernsubstituierte Derivate.

Als Endgruppen können die erfindungsgemäßen Polyestercarbonate —H, —OH, —$OC_6H_5$ oder von Kettenabbrechern herrührende Reste enthalten.

Die erfindungsgemäßen Polyestercarbonate können die Reste der Verbindungen (a) bis (e) in statistischer Verteilung oder in Blöcken enthalten.

Die erfindungsgemäßen Polyestercarbonate besitzen eine inhärente Viskosität von mindestens 0,5, vorzugsweise von mindestens 1,0 dl/g (gemessen an einer Lösung von 5 mg Polyestercarbonat/ml p-Chlorphenol bei 50 °C). Sollten Polyestercarbonate in p-Chlorphenol unlöslich sein, wird angenommen, daß sie die angegebene Mindestviskosität besitzen ; sie sind somit erfindungsgemäß, sofern sie den Parametern des Hauptanspruchs genügen.

Die erfindungsgemäßen Polyestercarbonate können nach verschiedenen Verfahren hergestellt werden, z. B. durch Kondensation der Carbonsäurechloride oder durch Veresterung der Carbonsäurearylester mit den phenolischen Verbindungen und anschließende Polykondensation, wobei die Carbonsäurechloride auch aus den entsprechenden Carbonsäuren und Chlorierungsmitteln *in situ* erzeugt werden können. Im Falle der Veresterung und anschließender Polykondensation wird so lange Phenol aus der Reaktionsmischung abdestilliert, bis der gewünschte Kondensationsgrad erreicht ist.

Bevorzugt wird ein Verfahren, bei dem die Carbonsäuren mit einem Diarylcarbonat, vorzugsweise Diphenylcarbonat, in die Arylester überführt und diese dann mit den phenolischen Verbindungen umgesetzt werden.

Die Reste der Verbindungen (a) bis (e) werden im Verhältnis der Ausgangskomponenten in das Polyestercarbonat eingebaut. Eine Ausnahme bildet bei der oben beschriebenen bevorzugten Ausführungsform des Umesterungsverfahrens das Diarylcarbonat, das zum einen als Reagenz zur Bildung der Carbonsäurearylester und zum anderen für die Bildung der Carbonatgruppen im Polyestercarbonat erforderlich ist. Das Äquivalentverhältnis Diarylcarbonat/Carbonsäurederivate beträgt daher bei dieser Verfahrensvariante mindestens 1 : 1, vorzugsweise (1,01 bis 1,1) : 1.

Es ist zweckmäßig, sowohl die Ver- bzw. Umesterungsreaktionen als auch die Polykondensationsreaktionen katalytisch zu beschleunigen. Derartige Katalysatoren sind bekanntlich z. B. Oxide, Hydride, Hydroxide, Halogenide, Alkoholate, Phenolate, Salze anorganischer oder organischer Säuren, Komplexsalze oder Mischsalze der Alkalimetalle, z. B. Lithium, Natrium, Kalium, der Erdalkalimetalle, z. B. Magnesium, Calcium, der Nebengruppenelemente, z. B. Vanadium, Titan, Mangan, Cobalt, Nickel, Zink, Lanthan, Cer, Zirkonium oder der Elemente aus anderen Gruppen des Periodensystems, z. B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Titantetrabutylat, Titantetrapropylat, Zirkoniumbutylat, Zirkoniumpropylat, Titantetraphenolat, Natriumphenolat, Germaniumdioxid, Antimontrioxid, Di-butyl-zinn-diacetat, Dibutyl-dimethoxy-zinn.

Die Katalysatormengen betragen vorzugsweise 0,001 bis 1, insbesondere 0,01 bis 0,2, Mol-%, bezogen auf Carbonsäuren bzw. ihre Derivate.

Die Reaktionstemperaturen bei dem bevorzugten Umesterungsverfahren können 150 °C bis 350 °C betragen, wobei man die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Im Prinzip kann sich eine Festphasennachkondensation bei Temperaturen bis zu ca. 250 °C anschließen, wobei die Schmelzviskositäten ansteigen und die erfindungsgemäßen thermotropen Polyestercarbonate in p-Chlorphenol unlöslich werden ; doch ist dies in der Regel unnötig.

Gelegentlich wird eine Molekulargewichtsregelung erwünscht, die durch die Polykondensationsreaktionen abbrechende, monofunktionelle Verbindungen erreicht werden kann.

Monofunktionelle Verbindungen in diesem Sinne sind monofunktionelle Carbonsäuren, vorzugsweise aromatische Carbonsäuren wie Benzoesäure, Chlorbenzoesäuren, Methylbenzoesäuren, Naphthalincarbonsäuren oder Diphenylcarbonsäuren, monofunktionelle aromatische Hydroxyverbindungen wie Phenol, Methylphenole, Ethylphenole, p-Nonylphenol, p-Chlorphenol, 4-(1,1-Dimethylpropyl)phenol, 4-(1,1,3,3-Tetramethylbutyl)-phenol, Dodecylphenole, Dimethylphenol, Hydroxynaphthaline und monofunktionelle Thiophenole wie Thiophenol, 4-Methylthiophenol. Bevorzugt wird 4-Hydroxybiphenyl verwendet.

Weiterer Gegenstand der Erfindung ist also ein Verfahren zur Herstellung der neuen Polyestercarbonate durch Veresterung von

(a) (ggf. substituierter) p-Hydroxybenzoesäure und ggf.
(d) aromatischer Dicarbonsäure mit
(c) Diarylcarbonat,

Umesterung der erhaltenen Arylester mit (b) Diphenol, weiterem (c) Diarylcarbonat und ggf. Kettenabbrechern und anschließende Polykondensation bei Temperaturen von 150 bis 350 °C in Gegenwart von 0,001 bis 1 Mol-%, bezogen auf Carbonsäuren bzw. ihre Derivate, Katalysator, ggf. unter vermindertem Druck.

Die erfindungsgemäßen thermotropen Polyestercarbonate können infolge ihrer relativ geringen Schmelzviskosität vorteilhaft aus der Schmelze zu Spritzgußformteilen, Fasern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, das heißt, daß die Schmelzviskosität bei Erhöhung der Scherkräfte stark abfällt.

Ein weiteres wesentliches Merkmal der erfindungsgemäßen aromatischen thermotropen Polyestercarbonate sind die hohen Schlagzähigkeits- bzw. Kerbschlagzähigkeitswerte.

Aus den erfindungsgemäßen Polyestercarbonaten können Formteile hoher Zugfestigkeit, außerordentlicher Zähigkeit und großer Dimensionsstabilität hergestellt werden. Da die Polyestercarbonate außerordentlich chemikalienresisten und flammwidrig sind, eignene sie sich bevorzugt zur Herstellung von

— elektrotechnischen Artikeln, z. B. Isolatoren, gedruckten Schaltungen, Steckkontakte, Armaturenteile,
— Teilen chemisch-technischer Apparate, z. B. Rohre, Behälterauskleidungen, Rotoren, Gleitlager, Dichtungen,
— Teilen der Flugzeuginnenausstattung,
— Teilen medizinisch-technischer Geräte, z. B. Bauteile von Klimaanlagen, Ventilteile.

Aufgrund ihrer besonderen Eigenschaften bieten sich die erfindungsgemäßen Polyestercarbonate auch zur Herstellung von Folien und Fasern an.

Weiterer Gegenstand der Erfindung ist also die Verwendung der neuen Polyestercarbonate zur Herstellung von Formkörpern, Filamenten, Fasern und Filmen.

## Beispiele

Die Prüfung der Schlagzähigkeit $a_n$ und Kerbschlagzähigkeit $a_k$ erfolgte an Normkleinstäben gemäß DIN 53 453 (ISO/R 179) bei 23 °C jeweils an 10 Prüfkörpern. Die Bestimmung der Biegefestigkeit wurde an Normkleinstäben gemäß DIN 53 452 (ISO R 178) durchgeführt. Der Biege-E-Modul wurde gemäß DIN 53 457 ermittelt. Die Messung der Wärmeformbeständigkeit erfolgte durch Bestimmungen der Vicat-B-Erweichungstemperatur gemäß DIN 53 460 (ISO 306). Das Fließverhalten in der Schmelze wurd durch die Messung des Schmelzindex (MFI) gemäß DIN 53 735 (ISO/R 1133) beurteilt. Die Düse hatte, wenn nicht anders angegeben, ein Längen- zu Dickenverhältnis (L/D) von 4 : 1.

### Beispiel 1

In einem Reaktionsgefäß mit Rührer und Destillierbrücke wurden 173,8 g p-Hydroxybenzoesäure, 39,6 g Hydrochinon, 33,5 g 4,4'-Dihydroxybiphenyl, 3,7 g 4-Hydroxybiphenyl, 0,46 g Zink(II)acetat und 404,6 g Diphenylcarbonat auf 250 °C erhitzt. Bei einer Innentemperatur von ca. 210 °C begann die Abspaltung von Kohlendioxid und bei 230°-240 °C die Destillation von Phenol.

Nach 1 Stunde hatte die Destillationsgeschwindigkeit soweit nachgelassen, daß die Temperatur auf

295 °C erhöht werden konnte. Nachdem die Destillation von Phenol weitgehend beendet war, wurde innerhalb von 1 Stunde bei 295 °C langsam ein Vakuum von $0{,}6 \times 10^{-3}$ bar angelegt und 2 Stunden bei diesem Vakuum und dieser Temperatur nachkondensiert.

Das erhaltene Polyestercarbonat wies eine ausgeprägte Faserstruktur auf und wurde bei einer Massetemperatur von 260 °C und einer Formtemperatur von 70 °C verspritzt. Die inhärente Viskosität $\eta_{inh}$ betrug 1,765.

Beispiel 2

In einem Reaktionsgefäß wie in Beispiel 1 wurden 150 g p-Hydroxybenzoesäure, 37,4 g Hydrochinon, 31,8 g 4,4'-Dihydroxybiphenyl, 3,29 g 4-Hydroxybiphenyl, 0,41 g Zink(II)acetat und 359,5 g Diphenylcarbonat auf 250 °C erhitzt. Nach 1 Stunde Reaktionszeit wurde die Temperatur auf 295 °C erhöht. Bei nachlassender Destillationsgeschwindigkeit wurde bei dieser Temperatur innerhalb von 1 Stunde ein Vakuum von $0{,}6 \times 10^{-3}$ bar angelegt und 2 Stunden bei dieser Temperatur und diesem Vakuum nachkondensiert. Das erhaltene Produkt wies eine ausgeprägte Faserstruktur auf und wurde bei einer Massetemperatur 260 °C und einer Formtemperatur von 70 °C verspritzt. Die inhärente Viskosität $\eta_{inh}$ betrug 1,885.

Beispiel 3

Wie in Beispiel 1 wurden 140,7 g-Hydroxybenzoesäure, 39,6 g Hydrochinon, 22,3 g 4,4'-Dihydroxybiphenyl, 0,38 g Zink(II)acetat und 337 g Diphenylcarbonat auf 250 °C erhitzt. Nach Erhöhung der Temperatur auf 295 °C und nachlassender Destillationsgeschwindigkeit wurde bei dieser Temperatur langsam innerhalb 1 Stunde ein Vakuum von $0{,}8 \times 10^{-3}$ bar angelegt und 2 Stunden nachkondensiert. Das erhaltene Produkt wies eine starke Faserstruktur auf und wurde bei einer Massetemperatur von 260 °C und einer Formtemperatur von 70 °C verspritzt. Die inhärente Viskosität $\eta_{inh}$ betrug 1,880.

Beispiel 4

Wie in Beispiel 1 wurden 140,7 g p-Hydroxybenzoesäure, 46,2 g Hydrochinon, 11,1 g 4,4'-Dihydroxybiphenyl, 0,37 g Zink(II)acetat und 337 g Diphenylcarbonat auf 250 °C erhitzt. Nach Erhöhung der Temperatur auf 295 °C und nachlassender Destillationsgeschwindigkeit wurde bei dieser Temperatur langsam innerhalb 1 Stunde ein Vakuum von $1{,}2 \times 10^{-3}$ bar angelegt und 1 Stunden nachkondensiert.

Das erhaltene Produkt wies ebenfalls eine ausgeprägte Faserstruktur auf und wurde bei 260 °C Massetemperatur und einer Formtemperatur von 70 °C verspritzt. Die inhärente Viskosität $\eta_{inh}$ betrug 2,228.

Beispiel 5

Wie in Beispiel 1 wurden 194 g p-Hydroxybenzoesäure, 48,6 g Hydrochinon, 40,7 g 4,4'-Dihydroxybiphenyl, 17,1 g Terephthalsäure, 0,55 g Zink(II)acetat und 487,6 g Diphenylcarbonat auf 250 °C erhitzt.

Nach Erhöhung der Temperatur auf 295 °C und nachlassender Destillationsgeschwindigkeit wurde bei dieser Temperatur langsam innerhalb 1 Stunde ein Vakuum von $0{,}5 \times 10^{-3}$ bar angelegt und 1 Stunde nachkondensiert.

Das erhaltene Produkt wies ebenfalls eine ausgeprägte Faserstruktur auf und wurde bei einer Massetemperatur von 285 °C und einer Formtemperatur von 70 °C verspritzt. Dieses Polyestercarbonat war in p-Chlorphenol unlöslich.

Beispiel 6

Wie in Beispiel 1 wurden 144,8 g p-Hydroxybenzoesäure, 24,75 g Hydrochinon, 41,85 g 4,4'-Dihydroxybiphenyl, 0,38 g Zink(II)àcetat und 337,2 g Diphenylcarbonat auf 250 °C erhitzt.

Nach Erhöhung der Temperatur auf 295 °C und nachlassender Destillationsgeschwindigkeit wurde bei dieser Temperatur langsam innerhalb 1 Stunde ein Vakuum von $1{,}06 \times 10^{-3}$ bar angelegt und 1 Stunde bei diesem Vakuum nachkondensiert.

Das erhaltene Produkt wies eine ausgeprägte Faserstruktur auf und wurde bei einer Massetemperatur von 260 °C und einer Formtemperatur von 70 °C verspritzt. Die inhärente Viskosität $\eta_{inh}$ betrug 2,389.

Die nachfolgende Tabelle gibt einen Überblick über die mechanischen Eigenschaften und Schmelzviskositäten der Polyestercarbonate nach Beispielen 1 bis 6.

(Siehe Tabelle Seite 7 f.)

Vergleichsversuch

Das gemäß Beispiel 1 der DE-PS 2 704 315 erhaltene Polyestercarbonat wurde auf seine Schmelz-

Tabelle

| Beispiel | Schlagzähigkeit /kJ/m²/ $a_n$ | Kerbschlagzähigkeit /kJ/m²/ $a_k$ | Biegefestigkeit /MPa/ | Biege-E-Modul /MPa/ | Vicat-B-Temperatur /°C/ | Schmelzindex /g/10 Min./ |
|---|---|---|---|---|---|---|
| 1 | 53 * | 30,5 * | 94 | 4.120 | 116 | (280°C/2,16 kp) 93,6 |
| 2 | 77,2 | 36,7 | 90,8 | 4.084 | 111 | (280°C/2,16 kp) 48 (L/D=10) |
| 3 | 91,6 * | 59,3 * | 95 | 3.950 | 117 | (280°C/2,16 kp) 22,3 |
| 4 | 79,9 * | 53,5 * | 100,2 | 4.247 | 121 | (280°C/2,16 kp) 133 |
| 5 | 61,3 * | 41,8 * | 98 | 5.880 | 143 | (300°C/21,6 kp) 22,4 |
| 6 | 45,2 | 42,4 | 77 | 3.054 | 116 | (280°C/1,2 kp) 9,5 |

* = angebrochen

fließfähigkeit geprüft. Dabei wurde ein Schmelzindexwert (280 °C/21,6 kp) von 6,25 [g/10 Min.] ermittelt.

Dieser Versuch zeigt deutlich, daß dieses Produkt eine wesentlich höhere Schmelzviskosität als das vergleichbare Produkt nach Beispiel 6 hat.

## Patentansprüche

1. Thermotrope voll-aromatische Polyestercarbonate mit einer inhärenten Viskosität von mindestens 0,5 dl/g (gemessen an einer Lösung von 5 mg Polyestercarbonat/ml p-Chlorphenol bei 50 °C) auf Basis von
   (a) (ggf. substituierter) p-Hydroxybenzoesäure,
   (b) Diphenol,
   (c) Kohlensäure und ggf.
   (d) aromatischer Dicarbonsäure,

wobei ein Teil der Diphenolreste (b) als 4,4'-Dihydroxybiphenylreste (e) vorliegt und — abgesehen von den Endgruppen — für die molaren Verhältnisse der Reste folgendes gilt :

$a + b = 1$,
$b = c + d$,
$e/b = 0,1$ bis $0,9$ und
$c/c + d = 0,6$ bis $1$ ;

$a = 0,4$ bis $0,8$
$b - e = 0,02$ bis $0,53$
$c = 0,12$ bis $0,6$
$d = 0$ bis $0,24$
$e = 0,02$ bis $0,53$.

2. Polyestercarbonate nach Anspruch 1, mit einer inhärenten Viskosität von mindestens 1,0 dl/g.
3. Polyestercarbonate nach Ansprüchen 1 und 2, wobei das Verhältnis e/b 0,11 bis 0,7 beträgt.
4. Polyestercarbonate nach Ansprüchen 1 bis 3, wobei das Verhältnis e/b 0,125 bis 0,4 beträgt.
5. Polyestercarbonate nach Ansprüchen 1 bis 4, wobei gilt

$a = 0,6$ bis $0,75$,
$b - e = 0,06$ bis $0,36$,
$c = 0,175$ bis $0,4$,
$d = 0$ bis $0,12$ und
$e = 0,027\,5$ bis $0,28$.

6. Verfahren zur Herstellung der Polyestercarbonate nach Ansprüchen 1 bis 5 durch Veresterung von
   (a) (ggf. substituierter) p-Hydroxybenzoesäure und ggf.
   (d) aromatischer Dicarbonsäure mit
   (c) Diarylcarbonat,

Umesterung der erhaltenen Arylester mit (b) Diphenol, weiterem (c) Diarylcarbonat und ggf. Kettenabbrechern und anschließende Polykondensation bei Temperaturen von 150 bis 350 °C in Gegenwart von 0,001 bis 1 Mol-%, bezogen auf Carbonsäuren bzw. ihre Derivate, Katalysator, ggf. unter vermindertem Druck.

7. Verwendung von Polyestercarbonaten nach Ansprüchen 1 bis 5 zur Herstellung von Formkörpern, Filamenten, Fasern und Filmen.

## Claims

1. Thermotropic, wholly-aromatic polyester carbonates having an inherent viscosity of at least 0.5 dl/g (measured using a solution of 5 mg of polyester carbonate/ml of p-chlorophenol at 50 °C), based on :
   (a) (optionally substituted) p-hydroxybenzoic acid,
   (b) diphenol,
   (c) carbonic acid and, optionally,
   (d) aromatic dicarboxylic acid,

some of the diphenol radicals (b) being present as 4,4'-dihydroxy-biphenyl radicals (e) and — apart from the end groups — the following applying to the molar ratios of the radicals :

$a + b = 1$
$b = c + d$,

e/b = 0.1 to 0.9 and
c/c + d = 0.6 to 1 ;

a = 0.4 to 0.8,
b — e = 0.02 to 0.53
c = 0.12 to 0.6
d = 0 to 0.24 and
e = 0.02 to 0.53.

2. Polyester carbonates according to claim 1 having an inherent viscosity of at least 1.0 dl/g.
3. Polyester carbonates according to claims 1 and 2, wherein the ratio e/b is 0.11 to 0.7.
4. Polyester carbonates according to claims 1 to 3, wherein the ratio e/b is 0.125 to 0.4.
5. Polyester carbonates according to claims 1 to 4, wherein

a = 0.6 to 0.75,
b — e = 0.06 to 0.36,
c = 0.175 to 0.4,
d = 0 to 0.12 and
e = 0.027 5 to 0.28.

6. Process for the production of the polyester carbonates according to claims 1 to 5 by the esterification of
(a) (optionally substituted) p-hydroxybenzoic acid and, optionally,
(d) aromatic dicarboxylic acid with
(c) diaryl carbonate,
transesterification of the resulting aryl esters with (b) diphenol, more diaryl carbonate (c) and, optionally, chain-terminators and subsequent polycondensation at temperatures of 150 to 350 °C in the presence of 0.001 to 1 mol%, based on carboxylic acids or the derivatives thereof, of a catalyst, optionally under reduced pressure.

7. Use of polyester carbonates according to claims 1 to 5 for the production of mouldings, filaments, fibres and films.

**Revendications**

1. Polyester carbonates thermotropes entièrement aromatiques ayant une viscosité inhérente d'au moins 0,5 dl/g (mesurée sur une solution de 5 mg du polyester-carbonate par ml de p-chlorophénol à 50 °C), à base de
(a) l'acide p-hydroxybenzoïque (éventuellement substitué),
(b) un diphénol,
(c) l'acide carbonique et le cas échéant,
(d) un acide dicarboxylique aromatique,
une partie des radicaux de diphénol (b) consistant en radicaux de 4,4'-dihydroxyphényle (e) et — abstraction faite des groupes terminaux — les proportions molaires entre les radicaux satisfont aux relations suivantes :

a + b = 1,
b = c + d,
e/b = 0,1 à 0,9 et
c/c + d = 0,6 à 1 ;

a = 0,4 à 0,8,
b — e = 0,02 à 0,53
c = 0,12 à 0,6
d = 0 à 0,24
e = 0,02 à 0,53.

2. Polyester-carbonates selon la revendication 1 ayant une viscosité inhérente d'au moins 1,0 dl/g.
3. Polyester-carbonates selon les revendications 1 et 2, dans lesquels le rapport e/b a une valeur de 0,11 à 0,7.
4. Polyester-carbonates selon les revendications 1 à 3, dans lesquels le rapport e/b a une valeur de 0,125 à 0,4.
5. Polyester-carbonates selon les revendications 1 à 4, satisfaisant aux relations suivantes :

a = 0,6 à 0,75,

b — e = 0,06 à 0,36,
c = 0,175 à 0,4,
d = 0 à 0,12 et
e = 0,027 5 à 0,28.

6. Procédé de préparation des polyester-carbonates selon les revendications 1 à 5 par estérification de

(a) l'acide p-hydroxybenzoïque (éventuellement substitué) et le cas échéant
(d) un acide dicarboxylique aromatique, par
(c) un carbonate de diaryle,

transestérification des esters aryliques obtenus par (b) le diphénol, un complément de carbonate de diaryle (c) et le cas échéant des coupeurs de chaînes, et polycondensation subséquente à des températures de 150 à 350 °C en présence de 0,001 à 1 mol%, par rapport aux acides carboxyliques ou leurs dérivés, d'un catalyseur, éventuellement sous vide.

7. Utilisation des polyester-carbonates selon les revendications 1 à 5 pour la fabrication d'objets moulés, de filaments, de fibres et de pellicules.